# EUROPÄISCHE PATENTANMELDUNG

(11) **EP 1 172 346 A2**
(43) Veröffentlichungstag der Anmeldung: **16.01.2002**
(21) Anmeldenummer: 01116557.8
(22) Anmeldetag: 09.07.2001
(51) Int. Cl.: C04B 38/08, C04B 28/26

(54) **Verfahren und Vorrichtung zur Herstellung wärmeisolierender, unbrennbarer, plattenförmiger Formkörper**

(30) Priorität: 12.07.2000 DE 10033804
(71) Anmelder: Viessmann, Hans, Dr. Dr., 95030 Hof/Saale (DE)
(72) Erfinder: Viessmann, Hans, Dr. Dr., 95030 Hof/Saale (DE)
(74) Vertreter: Wolf, Günter, Dipl.-Ing.

(57) **Zusammenfassung**

Die Erfindung betrifft Verfahren und eine Vorrichtung zur Herstellung wärmeisolierender, unbrennbarer und insbesondere plattenförmiger Formkörper in einer Form unter Verwendung von geblähtem Perlitgranulat. Nach der Erfindung sind folgende Verfahrensschritte vorgesehen:
1.1) Das Perlitgranulat wird mit einer bezogen auf die den Formkörper bildende Gesamtmenge des Perlitgranulates geringen Menge von verdünntem, in Form eines Aerosols an die Partikel herangeführten Wasserglas während der Zufuhr des Granulates in die Form benetzt.
1.2) Die Einbringung des benetzten Granulates wird in drei Schichten unter Einlage zweier appretierter Glasfasergitter jeweils zwischen zwei benachbarten Schichten bewirkt.
1.3) Nach der Einbringung des Granulates und der Glasfasergitter wird die Gesamtschüttung verdichtet, wobei
1.4) während oder nach der Verdichtung auf Enddimension des Formkörpers CO₂ zur Ausbildung nur punktueller, fester Bindungsbrücken aus dem Wasserglas zwischen den Partikeln in der Form zugeführt wird;
1.5) Danach wird der Formkörper aus der Form entnommen und
1.6) der Formkörper wird durch Energiezufuhr von innen heraus durch Mikrowellenbeaufschlagung getrocknet.

Das damit erielbare Produkt zeichnet sich dadurch aus, daß der aus handelsüblichem Perlitgranulat und Wasserglasbinder gebildete, verdichtete und getrocknete, plattenförmige Formkörper (101) zwei zueinander distanzierte, jeweils oberflächennah erstreckt eingebundene, appretierte Glasfasergitter (100) enthält.

## Beschreibung

Die Erfindung betrifft ein Verfahren und eine Vorrichtung zur Herstellung wärmeisolierender, unbrennbarer, plattenförmiger Formkörper unter Verwendung von Perlit, insbesondere für Wandbauelemente zur Erstellung von Raumzellen. Die Erfindung bezieht sich insoweit auch auf den Formkörper selbst.

Bei Perlit handelt es sich um ein in der Natur vorkommendes Mineral, d.h., um ein Kalium-Aluminium-Silikat, das nach Abbau durch Schockerhitzung um das 15-30-fache seines ursprünglichen Volumens expandiert und als Produkt in gebläht, unregelmäßig körniger Form anfällt und handelserhältlich ist, dessen Eigenschaften hinlänglich bekannt sind und die insoweit keiner näheren Erläuterung bedürfen. Mit Rücksicht auf diese Eigenschaften, und zwar was insbesondere geringes Gewicht, Unbrennbarkeit und schlechte Wärmeleitfähigkeit bzw. gute Wärmeisolation (Letzteres bedingt durch sogenannte Mikrospalte in den Partikeln) des expandierten Perlits betrifft, ist Perlit auch schon gemäß der GB-A-1499804 zur Ausbildung wärmeisolierender und feuerbeständiger Zusammensetzungen und Formkörpern verwendet worden, wobei Perlit nur als sogenannter "Füller" in solchen Zusammensetzungen neben Cenospheren und Brennstoffasche jedoch nur wenig mehr als die Hälfte der Gesamtzusammensetzung ausmacht. Bekannt ist aus der genannten GB-A-1499804 auch die Verwendung von Wasserglas mit einem relativ hohen Prozentanteil als Bindemittel und außerdem die Maßgabe, aus solchen Zusammensetzungen gebildete Gegenstände durch Begasung mit CO₂ zu härten. Außer dieser Maßgabe und der, daß die herzustellenden Gegenstände in einer entsprechenden Form auszuformen sind, ist in der GB-A-1499804 im Einzelnen nichts offenbart. Soweit bekannt, haben sich Formkörper gemäß dieser GB-A-1499804 auf dem Markt nicht eingeführt, und es kann nur vermutet werden, daß der Grund dafür im zu hohen Preis zu suchen ist, der wiederum seine Ursache in der Art der Herstellung und der speziellen Zusammensetzung haben dürfte.

Expandiertes Perlit in Verbindung mit in Wasser gelöstem Natrondisilikat bzw. eines Alkalisilikates wird zur Ausbildung von Formkörpern auch bspw. nach der DE-A-197 12 835 vorgeschlagen, wobei es sich bei diesen Formkörpern als Endprodukt jedoch um einen bei hohen Temperaturen zu vollziehenden Sinterprozeß verlangende Sinterprodukte handelt.

Der Erfindung liegt die Aufgabe zugrunde, ein Verfahren und eine Vorrichtung zur Herstellung wärmeisolierender, unbrennbarer, plattenförmiger Formkörper und zwar insbesondere für Wandbauelemente zur Erstellung von Raumzellen vorzuschlagen, wobei, abgesehen vom Bindemittel, ausschließlich von der Verwendung handelsüblichen Perlitgranulates ausgegangen werden soll und Verfahren und Vorrichtung eine wirtschaftliche Fertigung gewährleisten, und zwar wirtschaftlich hinsichtlich der Folgehandhabung und des erforderlichen Zeit- und Energieaufwandes für die Trocknung der Formstücke, die aber außerdem bei entsprechender Größe auch noch hohe Planität und Biegefestigkeit aufweisen sollen.

Für die Lösung dieser Aufgabe sind hinsichtlich des Verfahrens nach der Erfindung in Kombination die Verfahrensschritte 1.1 bis 1.6 gemäß unabhängigen Patentanspruch 1 durchzuführen.

Bezüglich der Vorrichtung zur Durchführung des Verfahrens wird auf den abhängigen Patentanspruch 7 verwiesen und bezüglich des verfahrensmäßig hergestellten Gegenstandes auf die abhängigen Ansprüche 12 bis 15.

Durch die erfindungsgemäße, gezielt von handelsüblich verfügbaren Perlit ausgehende Verfahrensführung wird dafür gesorgt, daß vom Bindemittel Alkalisilikatlösung nur so wenig wie möglich und soviel wie nötig zur späteren Bindung der Perlitpartikel im Formkörper an diese herangebracht wird, und zwar mit Rücksicht auf den Energie- und auch Zeitaufwand für die notwendige Trocknung. Wesentlich ist dabei auch eine gewisse Verdichtung der per Schüttung in die Form eingebrachten Perlitpartikel, um das in geringer Menge in der Schüttung vorhandene Bindemittel zwischen den Partikeln zur Wirkung zu bringen. An sich könnte man die so gebildeten Formkörper, in der Form verbleibend, sich selbst zur Trocknung bzw. "Aushärtung" überlassen, was aber einer wirtschaftlichen Fertigung mit möglichst geringem Zeitaufwand entgegenstünde. Die Zufuhr von CO₂ in Verbindung mit der Verdichtung, insbesondere aber die Bewehrung der Formstücke mit den beiden erfindungsgemäß eingebundenen Glasfasergittern machen demgegenüber eine unmittelbare Entnahme der Formkörper aus der Form und unmittelbare Überführung in einen Mikrowellentrockner erst möglich, dessen spezielle Anwendung für die Trocknung hier insofern von besonderer Bedeutung ist, als trotz schlechter Wärmeleitung des gebildeten und noch nassen Formkörpers auch das im Kern des Formkörpers anstehende Wasser von der per Mikrowellen eingebrachten Energie unmittelbar erfaßt und ausgetrieben wird. Bei demgegenüber nur durch äußere Beaufschlagung zugeführter Trocknungswärme hat sich gezeigt, daß zum einen ein solcher "normaler" Trocknungsvorgang viel zu lange dauert und zum anderen Restwasser im Kern praktisch nicht zu entfernen ist. Im übrigen ist unter der Formulierung "in Form eines Aerosols an die Partikel herangeführtes Wasserglas" zu verstehen, daß dieses in geeigneter Weise mit Luft vernebelt wird und die Partikel diesen Nebel passieren, was im einzelnen noch näher erläutert wird.

Die an sich unbestimmte Maßgabe "mit geringer Menge..." hat ihren Grund darin, daß von handelsüblichen, also keinem teureren, speziell fraktionierten Perlitgranulat mit unterschiedlichen Korngrößen ausgegangen wird, die zwecks Ausbildung nur punktueller Bindungen unterschiedliche Bindemittelmengen verlangen, d.h., dies bedarf einer experimentellen Bestimmung, und zwar immer unter dem Aspekt, dafür zu sorgen, daß für möglichst geringen Wasseranfall im auszuformenden und zu trocknenden Formkörper gesorgt wird. Handelsüblich und -erhältlich sind dabei Perlitgranulate mit oberen Korngrenzen bis 6 mm aber auch 3 mm, welche letzteren für den vorliegenden Fall bevorzugt werden, da bekanntlich feinkörnigerem Perlit eine geringere Wärmeleitfähigkeit zu eigen ist als grobkörnigerem.

Die als wesentlich bereits vorerwähnte erfindungsgemäße Einbindung zweier appretierter Glasfasergitter mit entsprechender Zuschnittsgröße in den beiden oberflächennahen Bereichen bei der Einschüttung des Granulates in die Form trägt aber nicht nur zur auch damit ermöglichten unmittelbaren Entnahme des Formkörpers aus der Form bei, sondern damit ist, wie sich gezeigt hat, auch gewährleistet, daß die hier sogenannte Planität des Formkörpers erhalten bleibt, selbst wenn, was anzustreben ist, die plattenförmigen Formkörper in Größenordnungen von 1 bis 2 m² und mehr hergestellt werden. Diese Beibehaltung der Planität ist auch zudem für den insbesondere vorgesehenen Ver wendungszweck der erfindungsgemäßen Formkörper von besonderer Bedeutung, nämlich den zur Ausbildung von Wandbauelementen für die Erstellung wärmeisolierter Raumzellen (bspw. sogenannte begeh-und befahrbare Kühl-und Frischhaltezellen), welche Wandbauelemente beidseitige Außenhäute aus vorzugsweise dünnem Blech aufweisen, die in feste Klebeverbindung mit dem wärmeisolierenden Kern, hier also dem plattenförmigen Formkörper gebracht werden müssen. Eine solche dauerhaft standfeste und spannungsfreie Verbindung mit einem feuerfesten, hydraulisch erhärtenden Kleber ist aber nur möglich, wenn von vornherein dafür gesorgt wird, daß der Formkörper in sich plan ist.

Mit dem erfindungsgemäßen Verfahren ist also ein Weg gefunden, derartige Formkörper wirtschaftlich herstellen zu können, die in etwa die gleiche Wärmedämmung wie PU-Schaum haben, darüber hinaus und im Gegensatz zu PU unbrennbar sind, eine Forderung, die insbesondere für die vorerwähnten Raumzellen immer häufiger gestellt wird. Aufgrund des erfindungsgemäßen Verfahrens sind aber derartige Formkörper trotz Einbindung zweier appretierter Glasfasergitter zudem zu einem zu PU konkurrenzfähigem Preis anbietbar, da hierbei gezielt von handelsüblich erhältlichen Perlitgranulat ausgegangen und mit Rücksicht auf den Wasseranfall sowenig wie möglich Wasserglas zur Anwendung gebracht, in spezieller Weise den Partikeln zugeführt und das im Formkörper aufgrund der Wasserglasreaktion anfallende Wasser in spezieller Weise ausgetrieben wird.

Das erfindungsgemäße Verfahren, die damit hergestellten Formkörper und die Vorrichtung zur Durchführung des Verfahrens einschließlich vorteilhafter Weiterbildungen werden nachfolgend anhand der zeichnerischen Darstellung von Ausführungsbeispielen näher erläutert.

Es zeigt
- Fig.1: schematisch den Verfahrensablauf;
- Fig.2: perspektivisch einen plattenförmigen Formkörper;
- Fig.3: schematisch ein Ausführungsbeispiel der Vorrichtung zur Durchführung des Verfahrens;
- Fig.4: schematisch die Einrichtung zur Appretur und Zuführung der Glasfasergitter;
- Fig.5: perspektivisch eine Ausführungsbeispiel der Form zur Herstellung plattenförmiger Formkörper und
- Fig.6: schematisch einen Schnitt durch den Mikrowellentrockner mit bevorzugter Positionierung eines im Durchlauf zu trocknenden, plattenförmigen Formkörpers

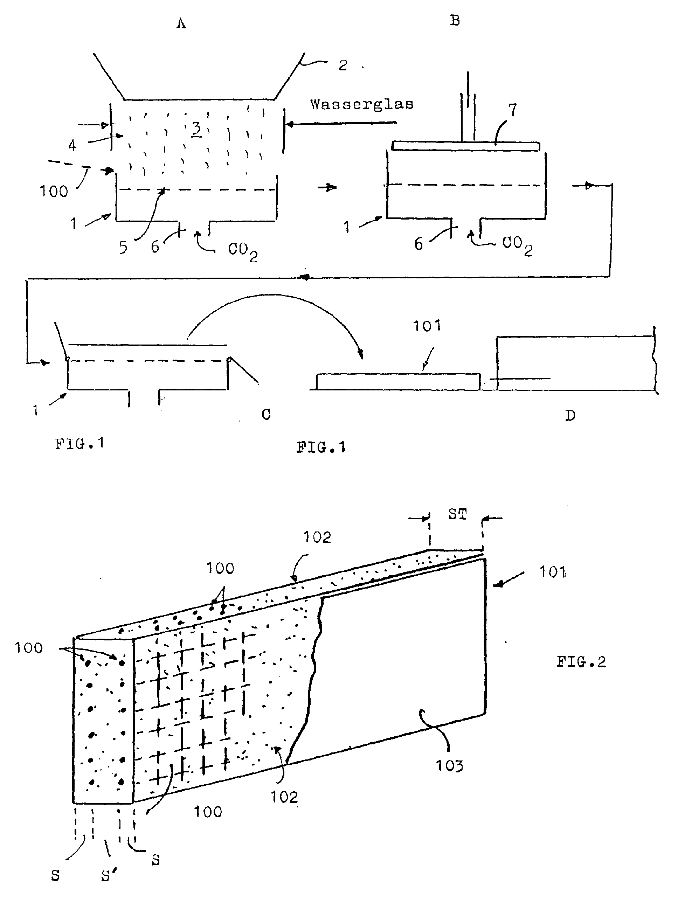

Die für das erfindungsgemäße Verfahren wesentlichen Schritte, nämlich
1.1) Das Perlitgranulat mit einer bezogen auf die den Formkörper bildende Gesamtmenge des Perlitgranulates geringen Menge von verdünntem, in Form eines Aerosols an die Partikel herangeführten Wasserglas wird während der Zufuhr des Granulates in die Form benetzt.
1.2) Die Einbringung des benetzten Granulates in die Form wird in drei Schichten unter Einlage zweier appretierter Glasfasergitter jeweils zwischen zwei benachbarten Schichten vollzogen.
1.3) Nach der Einbringung des Granulates und der beiden Glasfasergitter wird die Gesamtschüttung verdichtet, wobei
1.4) während oder nach der Verdichtung CO₂ zur Ausbildung nur punktueller, fester Bindungsbrücken aus dem Wasserglas zwischen den Partikeln bis zur oder nach Abschluß der Verdichtung der Partikel in der Form auf die Enddimension des Formkörpers zugeführt wird.
1.5) Danach wird der Formkörper aus der Form entnommen und
1.6) der Formkörper wird durch Energiezufuhr von innen heraus durch Mikrowellenbeaufschlagung getrocknet.
werden anhand des in Fig.1 schematisch dargestellten Verfahrensablaufes näher erläutert, den man sich auch als entsprechend getaktet kontinuierlich arbeitende Anlage vorstellen hat, wobei die Formen 1 bspw. Teile eines Endlosförderers sein können.

In der Station A wird das handelsüblich entsprechend gekörnte und geblähte Perlit als Granulat aus einem Vorratsbehälter 2 in die Form 1 mit der jeweils erforderlichen Schichtmenge eingeschüttet, und zwar derart, daß die drei in Folge eingegebenen Schüttströme 3 eine Kammer 4 passieren, in der sich das das durch Eindüsung gebildete Wasserglas-Aerosol befindet. In dieser Phase kann gegf. schon mit der Zuleitung von CO₂ in die Form begonnen werden, wofür die Form 1 bzw. 40 bspw. mit einem gelochten Boden 5 und einem CO₂ -Anschluß 6 versehen ist. Nach der ersten und zweiten Schichteinbringung wird jeweils eine der beiden appretierten Glasfasergitter 100 auf die betreffende Schicht S bzw. S' aufgelegt, was noch näher erläutert wird. Die Draufsichtsgröße der Form kann bspw. 60 bis 100 x 200 bis 300 cm² betragen.
In der Station B erfolgt die Verdichtung der eingefüllten Gesamtschüttung um 10-30% des urspünglich abgemessen eingefüllten Gesamtschüttvolumens. Die verdichtete Endstärke bzw. Dicke ST des Formkörpers 101 wird dabei mit Rücksicht auf das per Trocknung auszutreibende Wasser vorzugsweise in der Größenordnung von 30 bis 100 mm gehalten. Die auf und ab bewegliche Verdichtungsplatte 7 kann gegf. ebenfalls feingelocht sein, um auch von oben her CO₂ zuführen zu können.

Die Maßgabe, daß die Zufuhr von CO₂ "während oder nach" der Verdichtung erfolgt, nimmt Rücksicht darauf, daß eine Begasung mit CO₂ nach der Verdichtung dann befriedigend möglich ist, wenn der Verdichtungsgrad niedrig ist, d.h., bei höherer Verdichtung muß die Begasung schon während der Befüllung der Form einsetzen. Mit Vollzug einer relativ hohen Verdichtung geht praktisch und automatisch auch die CO₂ - Zufuhr zu Ende, da dabei das Gasaufnahmevermögen des Formkörpers erschöpft ist bzw. weitgehend blockiert wird.
Durch die Zufuhr von CO₂, das ja mit dem Wasserglas reagiert, bildet sich Natrium- bzw. Kaliumcarbonat und freiwerdende Kieselsäure, die zu einem sehr stabilen, dreidimensionalen Silicium-Sauerstoff-Gerüst polymerisiert, das in Folge die Perlitpartikel untereinander verbindet, dies aber nur punktuell, was sich als ausreichend erwiesen hat. Dabei werden die beiden Glasfasergitter fest mit eingebunden, die deshalb bevorzugt ebenfalls mit Wasserglas appretiert werden. Durch die kombinierte Verdichtung der die beiden Glasfasergitter 100 enthaltenden Gesamtschüttung und die CO₂-Begasung wird erreicht, daß der insoweit bereits fertige Formkörper 101 trotz minimal vorhandenen Wasserglases und die praktisch nur punktuelle Bindung der geblähten Perlitpartikel problemlos aus der Form 1 bzw. 40 entnommen werden (Station C) und in die Trocknungsstation D in geeigneter Weise übergeben werden kann. Da durch die reduzierte Wasserglasmenge entsprechend wenig Wasser im Formkörper 101 vorhanden ist, wird auch der Energie- und Zeitaufwand für die Mikrowellentrocknung entsprechend reduziert. Für die Form- bzw. Biegestabilität bzw. Planität des Formkörpers sorgen dabei die etwa jeweils 5 bis 10 mm zur jeweiligen Außenfläche 102 des Formkörpers distanziert fest eingebundenen Glasfasergitter 100, wie dies in Fig.2 schematisch dargestellt ist. Für diese appretierten Glasfasergitter ist wesentlich, daß diese die durchgehende Begasung nicht behindern und zum anderen aber auch nicht den Zusammenhalt der schichtweise in die Form eingegebenen drei Granulatschüttungen stören, d.h., die Maschenweite dieser Gitter muß so bemessen sein, daß in ihren Durchgangsöffnungen die ausgehärtete Bindemittelstruktur erhalten bleibt. Maschenweiten der Glasfasergitter von 5 bis 6 mm² gewährleisten dies und außerdem wird dies durch Wasserglas als bevorzugtes Appreturmittel unterstützt. Die Einzelstränge der Gitter bestehen dabei aus einer Vielzahl feinster Glasfasern.

Nach der Trocknung in der Station D wird der plane Formkörper 101 auf seinen beiden Großflächen 102 mit hydraulisch aushärtbarem Kleber bestrichen, und es werden die Decklagen 103 aus dünnem Blech mit entsprechender Zuschnittsgröße aufgeklebt.

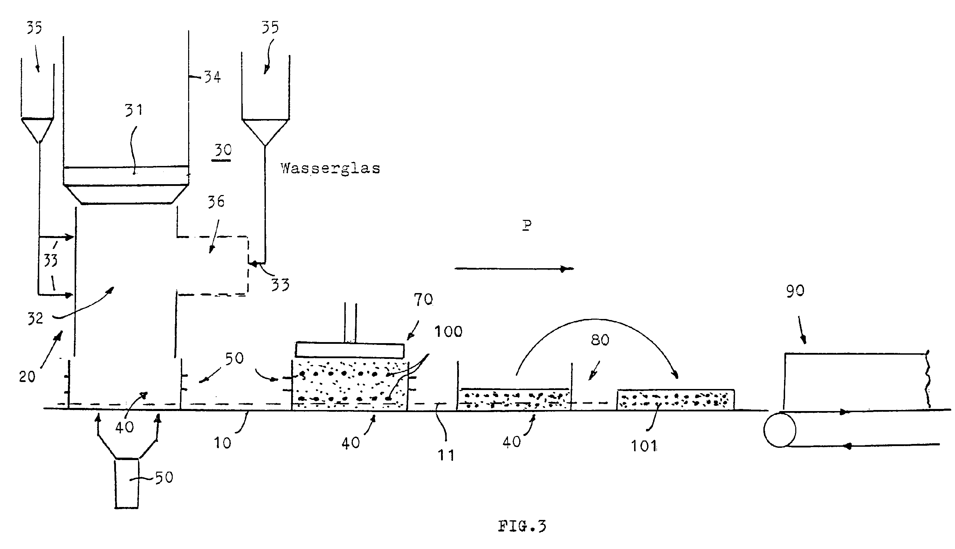

Orientiert an Fig.3 bis 5, die konkretere Ausführungsbeispiele der Vorrichtung zur Durchführung des Verfahrens schematisch zeigen, weist diese, zunächst unter Bezug auf Fig.3, eine Form-und Formkörpertransportstrecke 10 mit folgenden, wesentlichen Elementen auf:
Eine Formbefüllstation 20 mit Einrichtungen 30 zur Granulatmengendosierung und zur Umsetzung des verdünnten Wasserglases in ein Aerosol und zur Beaufschlagung der Perlitpartikel mit Wasserglas; mindestens eine Form 40 mit Einrichtungen 50 für die Zufuhr von CO₂; eine Station 70 zur Verdichtung der in die Form 40 eingebrachten Perlitpartikel; eine Station 80 zur Entnahme des Formkörpers 100 und am Ende der Transportstrecke 10 eine Mikrowellenbeaufschlagungsstation 90, an die sich eine weitere Bearbeitungsstation zur Aufbringung eines Feuerfestklebers und der vorerwähnten Decklagen 103 anschließt, die nicht besonders dargestellt ist, da ohne weiteres vorstellbar.

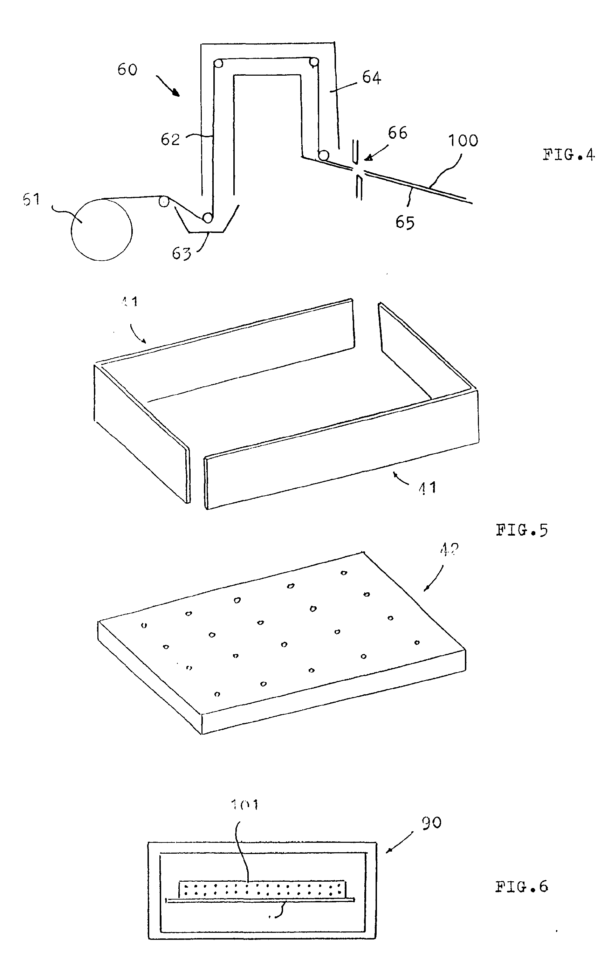

Die Einrichtung 60 für die Appretur und die Zufuhr der Glasfasergitter 100 bzw. Gitterzuschnitte in die Form 40 sind in Fig.4 verdeutlicht, wobei der Auslauf der appretierten und allein schon durch die Umgebungsluft etwas vorgetrockneten Glasfassergitter 100, die sich durch Abschneiden von einer Vorratsrolle 61 getaktet zugeführten Glasfasergitterbahn 62 ergeben, ist beim Ausführungsbeispiel nach Fig.3 von links kommend auf die dort befindliche Form 40 gerichtet. Wie in Fig.4 schematisch dargestellt, durchläuft die Gitterbahn ein Appreturbad 63, danach bspw. und gegf. einen Vortrocknungsschacht 64 und gelangt dann auf einen Führungstisch 65, an dem eine Schneideinrichtung 66 angeordnet ist.

Bei der Transportstrecke 10 kann es sich um eine einfache, entsprechend lange Tafel mit Führungsschienen 11 handeln, zwischen denen die Formen 40 je nach Größe von Hand oder automatisch in Förderrichung P verschoben werden, und zwar bis zur Entnahmestation 80, in der die bereits ausreichend stabil gewordenen Formkörper 101 entnommen und zum Weitertransport in den Mikrowellentrockner 90 umgestellt werden. Vorzugsweise wird dabei der zu trocknende, plattenförmige Formkörper 101 bzgl. seines Querschnittes im Sinne der Fig.6 liegend und auf einem für Mikrowellen durchlässigen Träger 91 durch den Mikrowellentrockner 90 transportiert.
Was die Einrichtungen 30 (siehe Fig.3) in der Formbefüllstation 20 betrifft, so bestehen diese aus einem Granulatvorratsbehälter 34 mit einem nur schematisch dargestellten Granulatmengendosierer 31, mit dem auch in geeignet Weise dafür gesorgt wird, daß das Granulat in Form eines stark aufgelockerten Schüttstromes eine Durchströmkammer 32 passiert und mit verdünntem Wasserglas benetzt in die darunter angeordnete Form 40 gelangt.

Die Einrichtungen 30 umfassen ferner, wie ebenfalls schematisch dargestellt, in die Durchströmkammer 32 gerichtete Injektordüsen 33, die mit Wasserglasvorratsbehältern 35 in Verbindung stehen und mit denen in der Kammer 32 ein Wasserglasnebel bzw. Wasserglasaerosol erzeugt wird. Zweckmäßig ist allerdings eine Ausführungsform der Wasserglas-Aerosolbildung dahingehend, daß das Aerosol vor Eingabe in die Kammer 32 erzeugt und mehr oder weniger sanft in die Kammer 32 eingeblasen wird, um die die Kammer 32 passierenden Partikel nicht durch einen scharfen seitlichen Düsenstrahl zu stören. Dies ist gestrichelt und schematisch rechts neben der Kammer 32 in Fig.3 mit angedeutet, wonach also zwischen der Perlitdurchströmkammer 32 und der mindestens einen Injektordüse 33 eine Strömungsberuhigungskammer 36 angeordnet ist. Als noch günstiger hat sich jedoch eine Gegenstromeindüsung des Wasserglases in die Durchströmkammer 32 erwiesen, was nicht besonders dargestellt ist, da ebenfalls ohne weiteres vorstellbar.
Unter Verweis auf Fig.5 sind die Seitenwände 41 der Form 40 zum Formboden 42, wie bspw. dargestellt, lösbar ausgebildet, um das Formstück problemlos entformen zu können. Nicht besonders dargestellt sind dabei geeignete Hilfsmittel, um die Seitenwände 41 gegeneinander und zum Boden 42 zu fixieren. Bei den Einrichtungen 50 zur CO₂ - Zuführung in die Form bzw. die Schüttung handelt es sich einfach um entsprechend bemessene Löcher im Formboden 42 und/oder den Seitenwänden 41, die bei der Verwendung von feinen Partikeln erforderlichenfalls mit einem geeigneten Feingewebe abgedeckt werden können.

## Patentansprüche

1. Verfahren zur Herstellung wärmeisolierender, unbrennbarer plattenförmiger Formkörper in einer Form unter Verwendung von geblähtem, handelsüblichen Perlitgranulat,
wobei in Kombination
1.1) das Perlitgranulat mit einer bezogen auf die den Formkörper bildende Gesamtmenge des Perlitgranulates geringen Menge von verdünntem, in Form eines Aerosols an die Partikel herangeführten Wasserglas während der Zufuhr des Granulates in die Form benetzt wird,
1.2) die Einbringung des benetzten Granulates in drei Schichten unter Einlage zweier appretierter Glasfasergitter jeweils zwischen zwei benachbarten Schichten bewirkt wird,
1.3) nach der Einbringung des Granulates und der Glasfasergitter die Gesamtschüttung verdichtet wird, wobei
1.4) während oder nach der Verdichtung auf Enddimension des Formkörpers CO₂ zur Ausbildung nur punktueller, fester Bindungsbrücken aus dem Wasserglas zwischen den Partikeln in der Form zugeführt wird;
1.5) danach der Formkörper aus der Form entnommen wird und
1.6) der Formkörper durch Energiezufuhr von innen heraus durch Mikrowellenbeaufschlagung getrocknet wird.

2. Verfahren nach Anspruch 1,
**dadurch gekennzeichnet,**
**daß** das Perlitgranulat mit Korngrößen bis maximal 6 mm, vorzugsweise bis 3 mm einschließlich der handelsüblich enthaltenen Feinanteile verwendet wird.

3. Verfahren nach Anspruch 1 oder 2,
**dadurch gekennzeichnet,**
**daß** durch Wasser im Verhältnis von mindestens 1:o,5 bis 1:1 verdünntes Wasserglas zur Benetzung des Perlitgranulates verwendet wird.

4. Verfahren nach einem der Ansprüche 1 bis 3,
**dadurch gekennzeichnet,**
**daß** die in die Form schichtweise eingebrachte Gesamtgranulatschüttung mit ihren zwischengelagerten Glasfasergittern um 10 bis 30 % verdichtet wird.

5. Verfahren nach einem der Ansprüche 1 bis 4,
**dadurch gekennzeichnet,**
**daß** für die Appretur der der Form entsprechend zugeschnittenen und eine Maschenweite von vorzugsweise 4-6mm² aufweisende Glasfasergitter ebenfalls Wasserglas verwendet wird.

6. Verfahren nach einem der Ansprüche 1 bis 5,
**dadurch gekennzeichnet,**
**daß** nach der Trocknung des Formkörpers auf dessen beiden Großflächen Decklagen aus dünnem Blech mittels hydraulich aushärtendem Kleber verklebt werden.

7. Vorrichtung zur Durchführung des Verfahrens nach den Ansprüche 1 bis 10,
**gekennzeichnet durch**
eine Form- und Formstücktransportstrecke (10) mit folgenden Elementen:
eine Formbefüllstation (20) mit Einrichtungen (30) zur Granulatmengendosierung in Schichten (S) und zur Umsetzung des verdünnten Wasserglases in ein Aerosol und zur Beaufschlagung der Perlitpartikel mit Wasserglas;
mindestens eine Form (40) zur Aufnahme der Granulatschichten mit Einrichtungen (50) für die Zufuhr von CO₂;
Einrichtungen (60) zur Zufuhr der Glasfasergitterzuschnitte (100) über und in die Form (40);
eine Station (70) zur Verdichtung der in die Form (40) eingebrachten Gesamtgranulatschüttung;
eine Station (80) zur Entnahme des gebildeten Formkörpers (101) und am Ende der Transportstrecke (10) eine Mikrowellenbeaufschlagungsstation (90).

8. Vorrichtung nach Anspruch 7,
**dadurch gekennzeichnet,**
**daß** die Einrichtungen (30) für die Umsetzung des Wasserglases in ein Aerosol aus mindestens einer in eine Perlitpartikeldurchströmkammer (32) gerichteten Injektordüse (33) gebildet sind.

9. Vorrichtung nach Anspruch 8,
**dadurch gekennzeichnet,**
**daß** zwischen der Perlitdurchströmkammer (32) und der mindestens einen Injektordüse (33) eine Strömungsberuhigungskammer (36) angeordnet ist.

10. Vorrichtung nach Anspruch 9,
**dadurch gekennzeichnet,**
**daß** die mindestens eine Injektordüse (33) von unten in die Perlitdurchströmkammer (32) weisend angeordnet ist.

11. Vorrichtung nach einem der Ansprüche 7 bis 10,
**dadurch gekennzeichnet,**
**daß** die Form (40) mit lösbaren Seitenwänden (41) versehen ist.

12. Formkörper hergestellt nach den Ansprüchen 1 bis 6,
**dadurch gekennzeichnet,**
**daß** der aus handelsüblichem Perlitgranulat und Wasserglasbinder gebildete, verdichtete und getrocknete, plattenförmige Formkörper (101) zwei zueinander distanzierte, jeweils oberflächennah erstreckt eingebundene, appretierte Glasfasergitter (100) enthält.

13. Formkörper nach Anspruch 12,
**dadurch gekennzeichnet,**
**daß** die Glasfasergitter (100) aus feinfasrigen Strängen mit einer Maschenweite in der Größenordnung von 5 bis 6 mm² gebildet und die Stränge zur Appretur mit Wasserglas versetzt sind.

14. Formkörper nach Anspruch 12 oder 13,
**dadurch gekennzeichnet,**
**daß** auf den beiden Großflächen (102) des Formkörpers (101) mindestens dessen Zuschnittsgröße entsprechende Decklagen (103) aus dünnem Blech mittels feuerfestem, hydraulisch aushärtendem Kleber aufgeklebt sind.

15. Formkörper nach einem der Ansprüche Anspruch 12 bis 14,
**dadurch gekennzeichnet,**
**daß** der Formkörper (101) mit einer Stärke (ST) von 30 bis 100 mm bemessen ist.
